# EUROPEAN PATENT SPECIFICATION

(11) **EP 1 638 292 B1**
(45) Date of publication and mention of the grant of the patent: **30.11.2011**
(21) Application number: 05255092.8
(22) Date of filing: 17.08.2005
(51) Int. Cl.: H04L 29/06

(54) **Digital rights management**
Digitale Rechteverwaltung
Gestion de droits numériques

(30) Priority: 15.09.2004 GB 0420541
(43) Date of publication of application: 22.03.2006
(73) Proprietor: Vodafone Group PLC, Newbury Berkshire RG14 2FN (GB)
(72) Inventor: Irwin, James, Leafield, OX29 9QS (GB); Wright, Timothy, Reading, RG1 4EB (GB); Mulligan, Caroline, Reading, RG1 8EG (GB)
(74) Representative: Harries, Simon George

(56) References cited:
- WO-A-2004/059451
- OPEN MOBILE ALLIANCE: "DRM Specification - Candidate Version 2.0 (OMA-DRM-DRM-V2_0-20040716-C)" INTERNET CITATION, [Online] 16 July 2004 (2004-07-16), XP002337407 Retrieved from the Internet: URL:http://member.openmobilealliance.org/f tp/Public_documents/BAC/DLDRM/2004/OMA-DLD RM-2004-0142-DRM-DRM.zip> [retrieved on 2005-07-22]

## Description

The present invention relates to the distribution of data between a plurality of devices associated in a domain.

Digital Rights Management (DRM) is a technology allowing encrypted digital files (or "content") to be readily distributed to potential users without charge. The encrypted data may be freely onwardly transmitted by the user receiving the data. However, for any user to be able to make use of the data, it must be decrypted. To obtain a key to decrypt the data, a licence must be purchased or otherwise obtained from a rights issuer or license broker.

DRM architecture includes the following functional entities.

Content provider: the content provider is an entity that delivers DRM content such as a song, computer program or mobile telephone ring tone. The content is typically encrypted and cannot be used in the form as received.

DRM content: this is the digital file containing data desired by the user. As indicated above, this can be freely distributed. The content is in encrypted form.

DRM agent: a DRM agent embodies a trusted entity in a device such as a mobile telephone or personal computer (PC). This trusted entity is responsible for enforcing permissions and constraints associated with DRM content, controlling access to the DRM content.

Rights object: a rights object is, for example, an XML document expressing permissions and constraints associated with a piece of DRM content. Rights objects govern how the DRM content may be used. DRM content cannot be used without an associated rights object, and may be only used as specified by the rights object. The rights object typically includes a key to allow decryption of the relevant encrypted content.

Rights issuer: the rights issuer is an entity that assigns permissions and constraints to the DRM content, and generates rights objects.

User: a user is the human user of DRM content. Users can only access DRM content through a DRM agent present on their device.

In a recent development of DRM, there have been proposals to allow a number of devices to be associated in a domain. The Open Mobile Alliance (OMA) DRM Specification V2.0 is available from the Open Mobile Alliance at the address http://member.openmobilealliance.org/ftp/Public_documents/BAC/ DLDRM/Permanent_documents/. The domain concept specified in the OMA DRM Specification V2.0 allows a user to register a number of their personal devices in a group or domain. Once a group of devices or domain has been established the user is free to copy content and rights between devices without the need to acquire new rights from a rights issuer. One drawback of this approach is that rights may be freely duplicated - i.e. it allows the same piece of content to be rendered on multiple devices at the same time.

According to a first aspect of the present invention, there is provided the method of distributing data between a plurality of devices associated in a domain, the method including receiving encrypted content data at a first of said devices; receiving decryption data at the first of said devices for allowing decryption of the encrypted content data; and operating the first device to compile an application including data from said content data and data from said decryption data and transmitting the application to one or more other devices in the domain such that the or each other device can use the application to reproduce the content data in decrypted form.

According to a second aspect of the present invention, there is provided a system for distributing data, including a mobile telecommunications network; a plurality of devices associated in a domain, at least one of which is registered with the mobile telecommunications network; a content provider for distributing encrypted content data; a rights issuer for distributing decryption data for allowing decryption of the encrypted content data; wherein the content provider is operable to provide encrypted content data to the first of said devices, the rights issuer is operable to transmit decryption data to the first of the devices for allowing decryption of the encrypted content data, wherein the first of the devices is operable to compile an application including data from the content data and data from the decryption data and to transmit the application to one or more other devices in the domain such that the or each other device can use the application to reproduce the content data in decrypted form.

According to a third aspect of the present invention, there is provided a data processing device for receiving encrypted content data and decryption data for allowing decryption of the encrypted content data, including means for compiling an application including data from said content data and data from said decryption data and transmitting the application to one or more other devices such that the or each other device can use the application to reproduce the content in decrypted form.

By compiling a (single) application including data from the content data and data from the decryption data and transmitting this application to another device in the domain, the first device may exercise control over distribution of the content data to prevent it being duplicated in an uncontrolled manner.

For a better understanding of the present invention, embodiments will now be described by way of example, with reference to the accompanying drawings, in which:

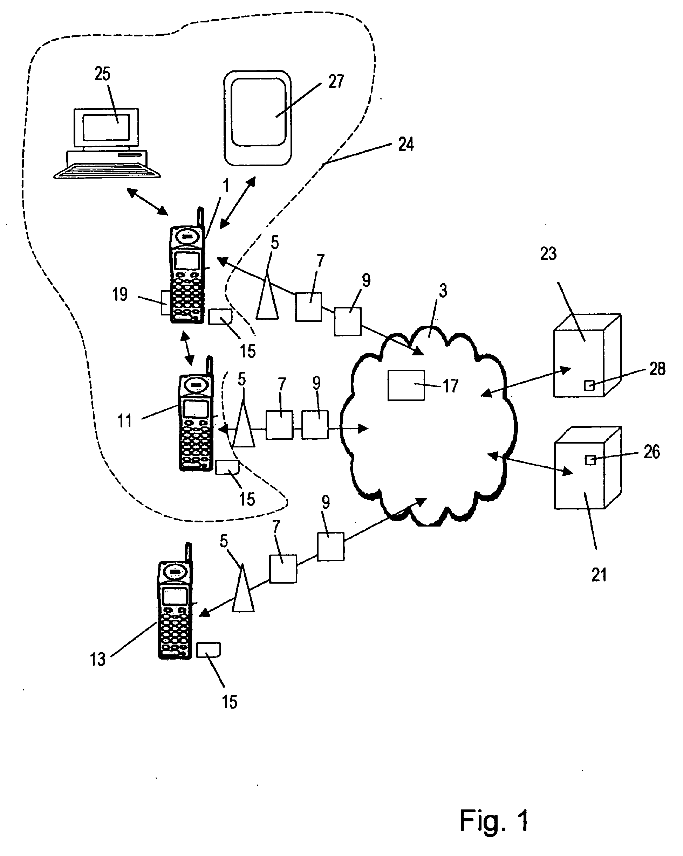

Figure 1 shows schematically the elements of a telecommunications network in accordance with the invention;
Figure 2 shows schematically two devices associated in a domain in which the consuming device has basic DRM functionality;
Figure 3 shows the data transmitted between respective parts of a telecommunications network of which the devices of Figure 1 form a part;
Figure 4 shows schematically two devices associated in a domain according to a second embodiment of the invention in which the consuming devices does not include basic DRM functionality; and
Figure 5 shows the messages exchanged between components of a telecommunications network in accordance with the second embodiment of the invention.

In the drawings like elements are generally designated with the same reference numerals.

Mobile terminal 1 is registered with GSM/GPRS or UMTS (3G) mobile telecommunications network 3. The mobile terminal 1 may be a handheld telephone (as shown), a personal digital assistant (PDA) or a laptop computer equipped with a datacard. The mobile terminal communicates wirelessly with mobile telecommunications network 3 via the radio access network (RAN) of the network 3, comprising, in the case of a UMTS network, base station (Node B) 5, and radio network controller (RNC) 7. Communications between the mobile terminal 1 and the network 3 are routed from the radio access network via GPRS support nodes (S/GGSN) 9, which may be connected by a fixed (cable) link to the network 3.

In the conventional manner, a multiplicity of mobile terminals are registered with the network 3. These mobile terminals include mobile terminal 11 and mobile terminal 13. The mobile terminals 11 and 13 communicate with the network 3 in a similar manner to the terminal 1, that is via an appropriate node B 5, RNC 7 and S/GGSN 9.

Each of the mobile terminals 1,11 and 13 is provided with a respective subscriber identity module (SIM) 15. During the manufacturing process of each SIM, authentication information is stored thereon under the control of the network 3. The network 3 itself stores details of each of the SIMs issued under its control. In operation of the network 3, a terminal 1,11,13 is authenticated (for example when the user activates the terminal in the network with a view to making or receiving calls) by the network sending a challenge to the terminal 1,11,13 incorporating a SIM 15, in response to which the SIM 15 calculates a reply (dependent on the predetermined information held on the SIM - typically an authentication algorithm and a unique key Ki) and transmits it back to the network 3. The network 3 includes an authentication processor 17 which generates the challenge and which receives the reply from the terminal 1,11,13. Using information pre-stored concerning the content of the relevant SIM 15, the authentication processor calculates the expected value of the reply from the mobile terminal 1,11,13. If the reply received matches the expected calculated reply, the SIM 15 and the associated mobile terminal are considered to be authenticated.

It should be understood that such an authentication process can be performed by any terminal provided with a SIM 15 under control of the network 3. In the embodiment the terminal communicates wirelessly with the network 3 via the networks radio access network, although this is not essential. For example, the terminal may communicate with the network 3 via the fixed telephone network (PSTN) and/or via the Internet.

The SIM 15 used by the terminals 1,11,13 may be a SIM of the type defined in the GSM or UMTS standards specifications, or may be a simulation of a SIM - that is, the software or hardware that performs a function corresponding to that of a SIM - for example, as described in WO-A-2004/036513.

In the embodiments the mobile terminal 1 includes a trusted module 19. This is hardware or software that is trusted to securely handle rights objects received from rights issuer 23. The rights issuer 23 is connected to the network 3 via a wireless or fixed link, for example via the Internet. Similarly, content provider 21 is coupled to the network 3 via a wireless or fixed link, for example via the Internet. The mobile terminal 1 forms a domain 24 in which the mobile terminal 1, mobile terminal 11, PC 25 and PDA 27 are associated. Some of the components of the domain (mobile terminals 1 and 11) are capable of wireless communication with the network 3, whereas some of the components (PC 25 and PDA 27) are not capable of wireless communication directly with the network 3 but are capable of local communication with the mobile terminal 1, for example via a Bluetooth (RTM) wireless link, an infra-red link or a cable link such as USB.

The domain 24 formed between the devices 1,11,25 and 27 in the embodiments is a domain in accordance with OMA DRM Specification V2.0. According to that specification the devices in a domain are defined as a number of devices that belong to or are associated with a single user and are provided with a common domain key which is obtained from the rights issuer 23. The rights issuer 23, by controlling the provision of the domain key, defines domains by managing the domain keys. The rights issuer 23 controls the addition or removal of devices from the domain. The user may request that a device is added or removed from a domain. Whether or not this request is accepted is determined by the rights issuer 23. Conversely a user can choose to remove a device from a domain and this does not require authorisation from the rights issuer; however, the fact that the device has left the domain is reported back to the rights issuer as the rights issuer may only allow a specific number of devices to belong to a domain at any one point in time.

If the rights issuer allows the device to join the domain then it sends the device the keys that are needed to access the content within that domain. Once a device is added to a domain then the user can move content and rights between that device and other devices in the domain without the need to acquire any additional rights objects. This is achieved through protecting the rights object with a shared key (the domain key) rather than the device's public key, which is the usual case. The domain key is transported to the device within the Domain Join variant of the ROAP (Right Object Acquisition Protocol).

When a device is removed from a domain the domain key is deleted and the device no longer has access to the domain content. Additionally a rights issuer can forcefully remove a device from a domain by upgrading the domain generation, when this happens the domain key is changed. If the user wishes to consume new domain content on a specific device then that device must re-register since any new domain content will be encrypted with the new domain key. The rights issuer can at this point refuse to re-register a specific device and therefore exclude it from the domain and therefore it is unable to access the new domain content.

One device may be a member of a multiplicity of domains, and these domains may be managed by one or more rights issuers.

By associating devices 1,11,25 and 27 in a domain 24, this enables distribution of content (and rights) to devices 25 and 27 that are not capable of communicating directly with the content provider 21 (and rights issuer 23). The content and rights are obtained by the mobile terminal 1 via the network 3 and are then distributed to the other devices in the domain 24 by a local communication link.

In a conventional DRM arrangement (where no domains are provided), the user of the mobile terminal 1 may browse content available from content provider 21 via the radio access network of mobile telecommunications network 3 and an Internet connection between the network 3 and the content provider 21, using, for example, a WAP browser provided on the mobile terminal 1. When the user of mobile terminal 1 identifies content that they wish to obtain from the content provider 21, the mobile terminal 1 is used to send a request via the network 3 and the Internet for the content to the content provider 21. The requested content 26 is transmitted to the mobile terminal 1 via the Internet and the network 3 in encrypted form such that the content 26 is of no use to the user of the mobile terminal 1 in the form that it is received. At this stage no charge has been made to the user of the mobile terminal 1 of the content provided by the content provider 21. If desired, the mobile terminal 1 may be used to onwardly transmit the encrypted content to other users in the network 3 and beyond. However, these other users will not be able to make use of the content as it is encrypted form at this stage.

When the user of mobile terminal 1, or the user of any other terminal to which the content 26 has been transmitted, wishes to make use of this content 26, they will be prompted by their terminal to purchase "rights" to make use of the content 26. If the user of the mobile terminal 8 accepts the purchase, this is communicated in the form of, for example, an SMS or WAP call to the rights issuer 23 via the radio access network of the mobile telecommunications network 3 and, for example, the Internet. The rights issuer 23 has an agreement with the content provider 21 to provide rights objects (licences) for use of the content 26. The payment for the rights object could be made, for example, by deducting an appropriate amount from the account of the user of the mobile terminal 1 with the network 3. When the payment has been made, a rights object 28 including a licence and content decryption key in the form of an SMS message or other type of message is sent to the mobile terminal 1 by the rights issuer 23 via the Internet and the radio access network of the mobile telecommunications network 3. The rights object 28 might, for example, grant the user of the mobile terminal 3 unlimited use of the content, or may restrict use of the content for a particular time period or for a particular number of uses (for example, if the content is recorded music, the licence may allow the music to be played ten times only), depending on the price paid for the content by the user. If the time period of use of the content is restricted, preferably the devices receiving the content are provided with a secure clock, such as described in GB-A-2403382.

If it is now assumed that mobile terminal 1 forms part of a domain 24 in accordance with the OMA DRM Specification V2.0. The rights object 28 containing the licence information obtained from the rights issuer 23 by the mobile terminal 1 and the content 26 obtained from the content provider 21 may be shared with the other devices 11,25 and 27 in the domain. That is, the rights object in the content may be transmitted by the mobile terminal 1 on request to the other devices 11,25,27 in the domain. On receipt of the content and the associated rights object, the other devices 11,25 and 27 may decrypt and make use of the content in a similar manner to the mobile terminal 1. The common domain key provided to each of the devices 1,11,25 and 27 facilitates this process.

While such an arrangement is convenient for the members of the domain 24, because the mobile terminal 1 is free to copy the content 26 and the rights object 28 to other devices in the domain 24, the content 26 and rights object 28 is in effect being duplicated so that the same piece of content 26 can be used on multiple devices. The DRM concept seeks to control the use of content by requiring a user to obtain a rights object to make use of the content. The domain concept as specified in the OMD DRM Specification V2.0 detracts from this concept by allowing the duplication of a rights object freely in a plurality of terminals in a domain. This will effectively bypass restrictions in the licence contained in the rights object 28, such as allowing a music recording to be reproduced only ten times. The rights object 28 will still be effective for each device 1,11,25 and 27 in the domain 24 but the downloaded rights object 28 will allow the music to be reproduced ten times by each of the devices 1,11,25 and 27 (i.e. forty times in total), rather than the ten times in total intended by the rights issuer 23.

In accordance with a feature of the embodiments of the invention, the trusted module 19 of the mobile terminal 1 is operable to effectively issue to each of the other devices 11,25 and 27 in the domain 24 a subset of the rights contained in the rights object 28 so that the content 26 obtained from the content provider 21 is used by the devices 1,11,25 and 27 in the domain 24 as a whole in accordance with the rights object. That is, if the rights object licence specifies that a music recording can be reproduced ten times, each time the trusted module 19 issues a subset of the rights object to a device in the domain 24, that use will be deducted from the remaining rights available in accordance with the rights object 28. Therefore, the recorded music may, for example, be reproduced only ten times in total irrespective of which or how many of the devices in the domain perform each of those reproductions.

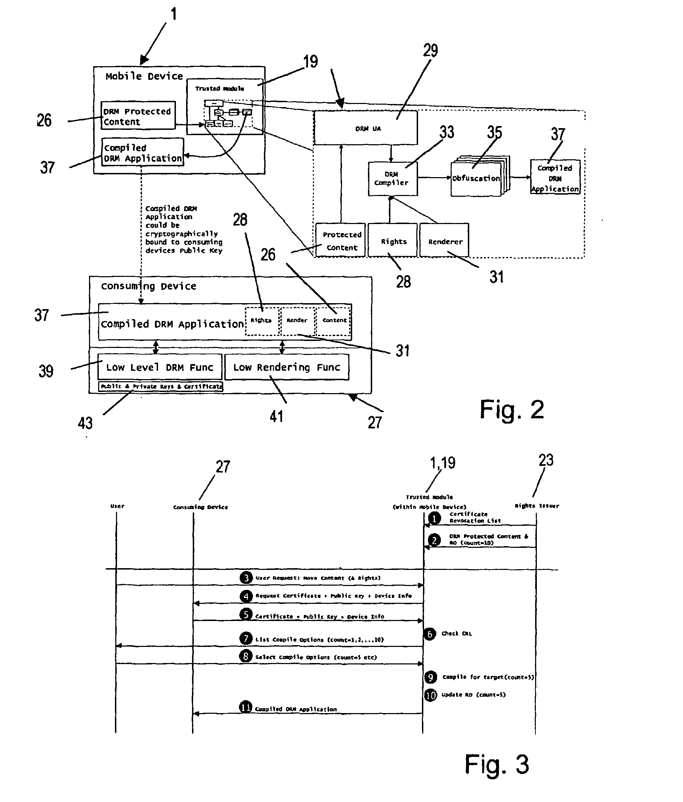

The trusted module 19 is shown in more detail in Figure 2. The trusted module 19 comprises a DRM user agent 29 that is responsible for enforcing permissions and constraints associated with the rights objects. The trusted module 19 also comprises a renderer generator 31 and a DRM compiler 33. The DRM compiler 33 receives protected or encrypted content 26 via the user agent 29, data from the rights object 28 and data from the renderer generator 31 and compiles code that includes DRM user agent functionality, rendering functionality, content and rights enabling use of the content. The code generated by the DRM compiler 33 is then passed to obfuscator 35 where it obfuscated.

A single compiled DRM application 37 is then generated and transmitted to a consuming device 11,25 or 27 within the domain 24 for reproduction of that content by a consuming device.

As will be known to those skilled in the software art, obfuscation is a process by which compiled source code is altered or transformed in a manner that makes decompilation difficult or impossible whilst retaining the original functionality of the compiled source code. A renderer is software or hardware (software in the case of the renderer incorporated into the compiled DRM application 37) that allows the reproduction of digital audio and/or visual data in a form that is useful to the user of a device. Microsoft Media Player (RTM) is an example of a renderer.

The consuming device (in this example PDA 27) receives the compiled DRM application 37. The consuming device 27 includes low level DRM function 39 and low level rendering function 41 which are used during running of the compiled DRM application 37 to reproduce the content in a controlled manner. The low level DRM function 39 accesses public key, private key and certificate store 43.

It is assumed that the mobile device 1 is authenticated with the network 3 in the usual manner by a data exchange between the device's SIM 15 and the network 3. During this authentication, information about the device 1 itself may be conveyed to the network - such as what facilities the device 1 has for performing DRM. Such information may be accessed by the rights issuer 23 prior to the rights issuer transmitting data destined for the device 1 - so that valuable data is not transmitted to a device without appropriate DRM facilities.

The process for obtaining and consuming content data 26 by the consuming device 27 will be described in more detail with reference to Figure 3.
Step 1: The rights issuer 23 provides a certificate revocation list to the mobile device 1, so that the mobile device 1 was an up-to-date list of revoked device certificates. A certificate authority (not shown) certifies the public keys of devices which wish to make use of content from the content provider 21 and certifies that the public keys of those devices are genuine and valid. The certificate authority issues a certificate to confirm this. The certificate revocation list lists certificates which are invalid.
Step 2: protected content 26 and rights 28 are delivered to the mobile terminal 1. The content 26 and rights 28 may be transmitted by any suitable CODEC. In this example the user of the mobile terminal 1 has purchased the rights 28 from the rights issuer 23 to use the content ten times.
Step 3: the user of mobile terminal 1 decides to move some (or all) of the rights to another device within the domain 24. The user of mobile terminal 1 uses the graphical user interface (such as a menu) of the mobile terminal 1 to select a target or consuming device 27 within the domain 24 to which the rights should be transmitted, and may also select the connectivity technology to be used to transmit the rights, such as Bluetooth (RTM), IrDA or USB.
Step 4: the mobile terminal 1 requests the target or consuming device 27 to provide information about itself (such as its audio-visual capabilities) and the devices public key and associated certificate.
Step 5: the consuming device 27 transmits the requested device information, its public key and associated certificate to the mobile terminal 1.
Step 6: the mobile terminal 1 checks the certificate received from the consuming device 27 against the certificate revocation list received from the rights issuer 23 to ensure that the certificate has not been revoked.
Step 7: assuming that the certificate has not been revoked, the mobile terminal 1 provides a list of options for the user in relation to the rights to use the relevant content - for example, if the content is a music video recording, whether to have rights to play the recording once, twice or any number of times (within the overall constraints provided by the rights object 28 issued to the mobile terminal 1 by the rights issuer 23).
Step 8: in this example, the user selects the consuming device 27 to have rights to play the content five times.
Step 9: the trusted module 19 of the mobile terminal 1 operates the DRM compiler 33 and obfuscator 35 to generate a compiled DRM application comprising the content and appropriate rights to allow that content to be reproduced five times (only), together with rendering information for use by the low level rendering function 41 on the consuming device 27. This information is provided in a single executable DRM application 37.
Step 10: the trusted module 19 of the mobile terminal 1 then updates the rights object 28 stored in that device to indicate that the rights to reproduce the content five times have been consumed (so that that content may be reproduced only five more times - assuming that the original rights object allowed reproduction ten times and that no prior permissions to reproduce the content have been granted).
Step 11: the compiled DRM application is then transmitted to the consuming device 27 by the selected connectivity technology.

The application is run by the consuming device 27. Because the compiled DRM application 37 has been compiled and encrypted using, *inter alia,* the public key of the consuming device 27, the low level DRM function 39 accesses the private key of the consuming device 27 from the store 43 in order to allow proper execution of the application. The rights forming part of the application 37 then enable the content to be reproduced in decrypted form, and the rendering software contained within the application 37 operates in conjunction with a low level rendering function 41 of the consuming device 27 to reproduce the content in a form that is satisfactory to the user of the consuming device 27.

The low level rendering capabilities of the low level rendering function 41 could include:

Codecs for decoding content; although the compiled application would probably need to authenticate these in some way to ensure that they are valid codecs rather than some software that can take the unencrypted content and store it in a file User Interface framework. A low level API or framework that could be utilised to describe the User Interface in a efficient manner thereby ensuring that the size of the compiled application is optimised/minimised. Other possible elements include audio processing features such as balance, graphic equalizers etc, visualisation (graphical representations of the music) etc and generally other media player features that are non DRM specific.

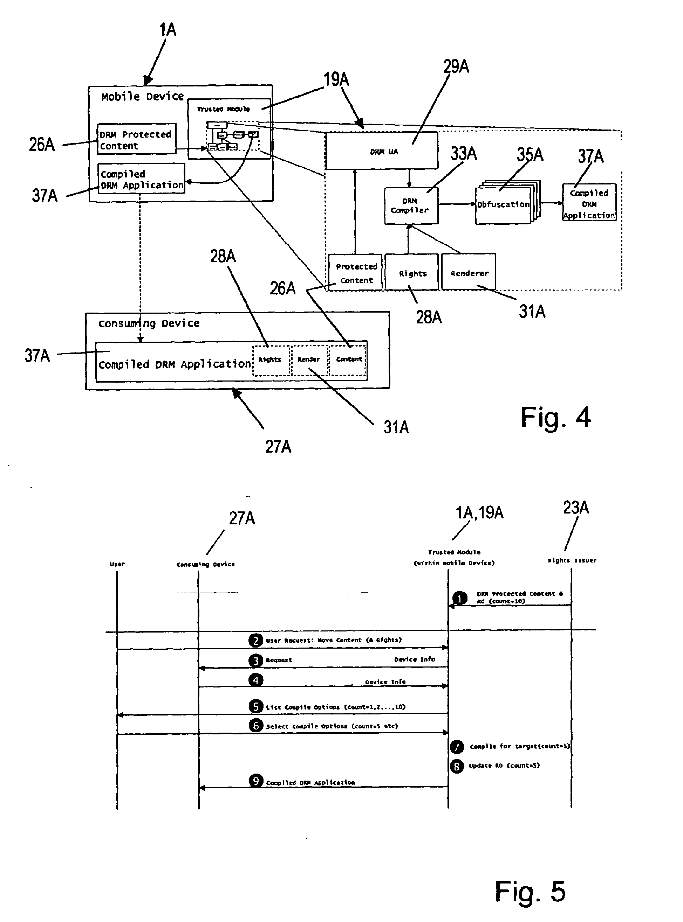

Figures 4 and 5 show a second embodiment of the invention in which the consuming device (in this example mobile terminal 11) has no low level DRM function and no low level rendering function. In Figures 4 and 5 elements similar to elements shown in Figures 2 and 3 have the same reference numbers but with the suffix "A".

In this embodiment it is necessary for the compiled DRM application 37A to be a fully featured stand-alone application capable of reproducing (rendering) the content in a form useful to the user of the consuming device 11.

The steps performed to obtain the compiled DRM application by the consuming device 11 will now be described with reference to Figure 5. Again, it is assumed that the device 1 is authenticated with the network 3.
Step 1: DRM protected content 26 and rights 28 are delivered to the mobile terminal 1. The content 26 and rights 28 may be transmitted by any suitable CODEC. In this example, the user of mobile terminal 1 has purchased the rights 28 to reproduce the content 26 (a music video recording) ten times.
Step 2: the user of mobile terminal 1 decides to move some (or all) of the rights 28 to another device within the domain 24. The user of mobile terminal 1 uses the graphical user interface (such as a menu) of the mobile terminal 1 to select a target device 11 within the domain 24 to which the rights should be transmitted, and may also select the connectivity technology to be used to transmit the rights, such as Bluetooth (RTM), IrDA or USB.
Step 3: the mobile terminal 1 requests that the consuming device 11 provides information about itself (such as its audio-visual capabilities).
Step 4: the consuming device 11 transmits the requested device information to the mobile terminal 1.
Step 5: the mobile terminal 1 provides a list of options for the user in relation to the rights to use the relevant content - for example, if the content is a music video recording, whether to have rights to play the recording once, twice or any number of times (within the overall constraints provided by the rights object 28 issued to the mobile terminal 1 by the rights issuer 23).
Step 6: in this example, the user selects the consuming device 11 to have rights to play the content five times.
Step 7: the trusted module 19 of the mobile terminal 1 operates the DRM compiler 33 and obfuscator 35 to generate a compiled DRM application comprising the content and appropriate rights to allow that content to be reproduced five times (only), together with rendering information for use by the low level rendering function 41 on the consuming device 27. This information is provided in a single executable DRM application 37.
Step 8: the trusted module 19 of the mobile terminal 1 then updates the rights object stored in that device to indicate that the rights to reproduce the content five times have been consumed (so that that content may be reproduced only five more times - assuming that the original rights object allowed reproduction ten times and that no prior permissions to reproduce the content have been granted).
Step 9: the compiled DRM application is then transmitted to the consuming device 27 by the selected connectivity technology.

With the second embodiment it is possible that the consuming device 11 could transmit the compiled DRM application to another device because the compiled DRM application is not tied to the consuming device by its public/private key in the manner of the first embodiment. Therefore, at present, the first embodiment is preferred.

In the second embodiment the compiled DRM application will be a larger file because it requires a self-contained renderer in order to allow the content to be reproduced on the consuming device 11. In the first embodiment, the consuming device 27 includes a low level rendering function 41, which will perform some of the processing required for rendering of the content, meaning that the data in the compiled DRM application 37 relating to rendering of the content is less.

The keys and other data associated with the rights in the compiled DRM application 37 that control its use are embedded within the obfuscated code of the application. This makes it very difficult for somebody to illegitimately obtain these keys and reproduce the content when not properly authorised to do so. This is particularly true if the obfuscator 35 varies the obfuscation techniques used - so that even if the location of the keys is determined in one application, the location of the keys in another, differently obfuscated, application will remain secret. As will be appreciated, in both the first and second embodiments (and particularly in the first embodiment), the compiled DRM application 37 is a much larger file than the rights object that would, in accordance with the prior art, conventionally be transmitted to a consuming device separately from the encrypted content. Such a prior art arrangement (for example as proposed in OMA DRM Specification V2.0), would make it easier for a person to illegitimately obtain the keys from the rights object because the file within which the keys are embedded is significantly smaller.

In the embodiments the trusted module 19 is part of the mobile terminal 1. The trusted module could be implemented by the SIM 15 if the SIM 15 was provided with additional processing power.

## Claims

1. A method of distributing data between a plurality of devices (1,11,25,27) associated in a domain (24), the method including receiving encrypted content data at a first of said devices (1); receiving decryption data at the first of said devices (1) for allowing decryption of the encrypted content data; and operating the first device (1) to compile an application including data from said content data and data from said decryption data and transmitting the application to one or more other devices (27) in the domain (24) such that the or each other device (27) can use the application to reproduce the content data in decrypted form.

2. The method of claim 1, wherein the encrypted content data received at the first device (1) is received from a content provider (21) remote from the first device (1).

3. The method of claim 1 or 2, wherein the decryption data received at the first device (1) is received from a rights issuer (23) remote from the first device (1).

4. The method of claim 1,2 or 3, wherein the first of said devices (1) comprises a mobile telecommunications device.

5. The method of claim 1,2,3 or 4, wherein the or at least one of the other devices (27) comprises a mobile telecommunications device.

6. The method of claim 4 or 5, wherein the or each mobile telecommunications device communicates wirelessly with a mobile telecommunications network (3).

7. The method of claim 6, wherein the encrypted content data received at the first device (1) is transmitted via the mobile telecommunications network (3).

8. The method of claim 6 or 7, wherein the decryption data received at the first device (1) is transmitted via the mobile telecommunications network (3).

9. The method of claim 6,7 or 8, wherein the mobile telecommunications network (3) comprises a GSM mobile telecommunications network.

10. The method of claim 6,7,8 or 9, wherein the mobile telecommunications network (3) comprises a UMTS (3G) mobile telecommunications network.

11. The method of any one of claims 1 to 10, wherein each of the devices (1,11,25,27) in the domain (24) share a domain key.

12. The method of any one of claims 1 to 11, wherein the domain (24) comprises a domain as defined in the Open Mobile Alliance DRM Specification version 2.0 or any subsequent version thereof.

13. The method of any one of claims 1 to 12, wherein the step of transmitting the application to one or more of the other devices (27) in the domain (24) is performed by a local communication.

14. The method of claim 13, wherein the local communication comprises a wireless link, such as WLAN, Bluetooth or infrared.

15. The method of claim 13, wherein the local communication is performed by means of a cable or other fixed link.

16. The method of any one of claims 1 to 15, including obfuscating the code forming the application prior to transmitting the application to one or more of the other devices (27) in the domain (24).

17. The method of any one of claims 1 to 16, wherein the application includes data for facilitating the rendering of the content data on the or each other device (27).

18. The method of claim 17, wherein the rendering includes causing the or each other device (27) to generate an audio and/or visual output useful to the user of that device.

19. The method of any one of claims 1 to 18, wherein the decryption data controls or restricts use of the content data.

20. The method of claim 19, including maintaining in the first device (1) a record of received decryption data and a record of data from said decryption data transmitted as part of the application to one or more of the other devices (27) such that use of the content within the domain is in accordance with the decryption data.

21. The method of claim 19 or 20, wherein the decryption data specifies the number of times that the content data can be used.

22. The method of claim 19,20 or 21, wherein the decryption data specifies the time period during which the content data can be used.

23. The method of any one of claims 6 to 10, wherein the or each mobile telecommunications device is authenticated with a mobile telecommunications network.

24. The method of any one of claims 1 to 23, wherein the data from said decryption data is embedded within the application in order to inhibit the ability of a third party to illegitimately identify that data.

25. The method of any one of claims 1 to 24, wherein the application is compiled using a key associated with the or each other device such that the content data can only be reproduced in decrypted form on the or each other device in conjunction with the key or another key associated with the key.

26. A system for distributing data, including a mobile telecommunications network (3); a plurality of devices (1,11,25,27) associated in a domain (24), at least one of which is registered with the mobile telecommunications network (3); a content provider (21) for distributing encrypted content data; a rights issuer (23) for distributing decryption data for allowing decryption of the encrypted content data; wherein the content provider (21) is operable to provide encrypted content data to the first of said devices (1), the rights issuer (23) is operable to transmit decryption data to the first of the devices for allowing decryption of the encrypted content data, wherein the first of the devices (1) is operable to compile an application including data from the content data and data from the decryption data and to transmit the application to one or more other devices (27) in the domain (24) such that the or each other device (27) can use the application to reproduce the content data in decrypted form.

27. A data processing device (1) for receiving encrypted content data and decryption data for allowing decryption of the encrypted content data, including means for compiling an application including data from said content data and data from said decryption data and transmitting the application to one or more other devices (1,11,25,27) such that the or each other device can use the application to reproduce the content in decrypted form.

28. The device of claim 27, wherein the device (1) and the or each other devices (1,11,25,27) are associated in a domain (24).

29. The device of claim 27 or 28, comprising a mobile telecommunications device.

30. The device of claim 29, wherein the mobile telecommunications device is operable to communicate wirelessly with a mobile telecommunications network (3).

31. The device or system of any one of claims 26 to 30, wherein the encrypted content data received at the device (1) is received from a content provider (21) remote from device (1).

32. The device or system of any one of claims 26 to 31, wherein the decryption data received at the device (1) is received from a rights issuer (23) remote from the device (1).

33. The device or system of any one of claims 31 to 32, wherein the encrypted content data received at the device (1) is transmitted via the mobile telecommunications network (3).

34. The device or system of any one of claims 31 to 33, wherein the decryption data received at the device (1) is transmitted via the mobile telecommunications network (3).

35. The device or system of any one of claims 26 to 34, wherein the mobile telecommunications network (3) comprises a GSM mobile telecommunications network.

36. The device or system of any one of claims 26 to 35, wherein the mobile telecommunications network (3) comprises a UMTS (3G) mobile telecommunications network.

37. The device or system of any one of claims 26 to 36, wherein each of the devices (1,11,25,27) in the domain share a domain key.

38. The device or system of any one of claims 26 to 37, wherein the domain comprises a domain as defined in the Open Mobile Alliance DRM Specification version 2.0 or any subsequent version thereof.

39. The device or system of any one of claims 26 to 38, including local communication means for transmitting the application to one or more of the other devices (27) in the domain (24).

40. The device or system of claim 39, wherein the local communication comprises a wireless link, such as WLAN, Bluetooth or infrared.

41. The device or system of claim 39, wherein the local communication is performed by means of a cable or other fixed link.

42. The device or system of any one of claims 26 to 41 including means for obfuscating the code forming the application prior to transmitting the application to one or more of the other devices in the domain.

43. The device or system of any one of claims 26 to 42, wherein the application includes data for facilitating the rendering of the content data on the or each other device.

44. The device or system of claim 43, wherein the rendering includes causing the or each other device to generate an audio and/or visual output useful to the user of that device.

45. The device or system of any one of claims 26 to 44, wherein the decryption data is useable to control or restrict use of the content data.

46. The device or system of claim 45, including means for maintaining in the device a record of received decryption data and a record of data from said decryption data transmitted as part of the application to one or more other devices such that use of the content within the domain is in accordance with the decryption data.

47. The device or system of any one of claims 45 to 46, wherein the decryption data specifies the number of times that the content data can be used.

48. The device or system of any one of claims 45 to 47, wherein the decryption data specifies the time period during which the content data can be used.

49. The device or system of any one of claims 26 to 48, wherein the or each mobile telecommunications device is authenticated with a mobile telecommunications network (3).

50. The device or system of any one of claims 26 to 49 including means for embedding the data from said decryption data within the application in order to inhibit the ability of a third party to illegitimately identify that data.

51. The device or system of any one of claims 26 to 50 including means for compiling the application using a key associated with the or each other device such that the content data can only be reproduced in decrypted form on the or each other device in conjunction with the key or another key associated with the key.

## Patentansprüche

1. Verfahren zum Verteilen von Daten zwischen mehreren in einer Domäne (24) assoziierten Geräten (1, 11, 25, 27), wobei das Verfahren Folgendes beinhaltet:
Empfangen von verschlüsselten Inhaltsdaten an einem ersten der genannten Geräte (1); Empfangen von Entschlüsselungsdaten an dem ersten der genannten Geräte (1), um das Entschlüsseln der verschlüsselten Inhaltsdaten zuzulassen; und Betreiben des ersten Geräts (1) zum Kompilieren einer Anwendung mit Daten aus den genannten Inhaltsdaten und Daten aus den genannten Entschlüsselungsdaten, und Übertragen der Anwendung zu einem oder mehreren anderen Geräten (27) in der Domäne (24), so dass das oder jedes andere Gerät (27) die Anwendung zum Wiedergeben des Inhaltsdaten in entschlüsselter Form verwendet werden kann.

2. Verfahren nach Anspruch 1, wobei die an dem ersten Gerät (1) empfangenen verschlüsselten Inhaltsdaten von einem Inhaltsanbieter (21) fern von dem ersten Gerät (1) empfangen werden.

3. Verfahren nach Anspruch 1 oder 2, wobei die an dem ersten Gerät (1) empfangenen Entschlüsselungsdaten von einem Rechteausgeber (23) fern von dem ersten Gerät (1) empfangen werden.

4. Verfahren nach Anspruch 1, 2 oder 3, wobei das erste der genannten Geräte (1) ein mobiles Telekommunikationsgerät umfasst.

5. Verfahren nach Anspruch 1, 2, 3 oder 4, wobei das wenigstens eine der anderen Geräte (27) ein mobiles Telekommunikationsgerät umfasst.

6. Verfahren nach Anspruch 4 oder 5, wobei das oder jedes mobile Telekommunikationsgerät drahtlos mit einem mobilen Telekommunikationsnetzwerk (3) kommuniziert.

7. Verfahren nach Anspruch 6, wobei die an dem ersten Gerät (1) empfangenen verschlüsselten Inhaltsdaten über das mobile Telekommunikationsgerät (3) übertragen werden.

8. Verfahren nach Anspruch 6 oder 7, wobei die an dem ersten Gerät (1) empfangenen Entschlüsselungsdaten über das mobile Telekommunikationsnetz (3) übertragen werden.

9. Verfahren nach Anspruch 6, 7 oder 8, wobei das mobile Telekommunikationsnetz (3) ein mobiles GSM-Telekommunikationsnetz umfasst.

10. Verfahren nach Anspruch 6, 7, 8 oder 9, wobei das mobile Telekommunikationsnetz (3) ein mobiles UMTS-(3G)-Telekommunikationsnetz umfasst.

11. Verfahren nach einem der Ansprüche 1 bis 10, wobei alle Geräte (1, 11, 25, 27) in der Domäne (24) einen Domänen-Schlüssel gemeinsam nutzen.

12. Verfahren nach einem der Ansprüche 1 bis 11, wobei die Domäne (24) eine Domäne gemäß Definition in der Open Mobile Alliance DRM Specification Version 2.0 oder einer beliebigen Folgeversion davon umfasst.

13. Verfahren nach einem der Ansprüche 1 bis 12, wobei der Schritt des Übertragens der Anwendung zu einem oder mehreren der anderen Geräte (27) in der Domäne (24) durch lokale Kommunikation erfolgt.

14. Verfahren nach Anspruch 13, wobei die lokale Kommunikation eine drahtlose Verbindung wie z.B. WLAN, Bluetooth oder Infrarot umfasst.

15. Verfahren nach Anspruch 13, wobei die lokale Kommunikation über ein Kabel oder eine andere feste Verbindung erfolgt.

16. Verfahren nach einem der Ansprüche 1 bis 15, das das Verschleiern des die Anwendung bildenden Codes beinhaltet, bevor die Anwendung zu einem oder mehreren der anderen Geräte (27) in der Domäne (24) übertragen wird.

17. Verfahren nach einem der Ansprüche 1 bis 16, wobei die Anwendung Daten zum Erleichtern der Darstellung der Inhaltsdaten auf dem oder jedem anderen Gerät (27) beinhaltet.

18. Verfahren nach Anspruch 17, wobei das Darstellen beinhaltet, dass das oder jedes Gerät (27) veranlasst wird, einen für den Benutzer dieses Gerätes nützlichen Audio- und/oder Videoausgang zu erzeugen.

19. Verfahren nach einem der Ansprüche 1 bis 18, wobei die Entschlüsselungsdaten die Nutzung der Inhaltsdaten steuern oder beschränken.

20. Verfahren nach Anspruch 19, das das Führen eines Satzes von empfangenen Entschlüsselungsdaten und eines Satzes von Daten von den genannten Entschlüsselungsdaten in dem ersten Gerät (1) beinhaltet, die als Teil der Anwendung zu einem oder mehreren der anderen Geräte (27) übertragen wurden, so dass die Nutzung des Inhalts in der Domäne gemäß den Entschlüsselungsdaten erfolgt.

21. Verfahren nach Anspruch 19 oder 20, wobei die Entschlüsselungsdaten angeben, wie oft die Inhaltsdaten benutzt werden können.

22. Verfahren nach Anspruch 19, 20 oder 21, wobei die Entschlüsselungsdaten die Zeitperiode angeben, während der die Inhaltsdaten benutzt werden können.

23. Verfahren nach einem der Ansprüche 6 bis 10, wobei das oder jedes mobile Telekommunikationsgerät mit einem mobilen Telekommunikationsnetzwerk authentifiziert wird.

24. Verfahren nach einem der Ansprüche 1 bis 23, wobei die Daten aus den genannten Entschlüsselungsdaten in der Anwendung eingebettet sind, um zu verhindern, dass eine Fremdpartei diese Daten unrechtmäßig identifizieren kann.

25. Verfahren nach einem der Ansprüche 1 bis 24, wobei die Anwendung mit einem Schlüssel kompiliert wird, der mit dem oder jedem anderen Gerät assoziiert ist, so dass die Inhaltsdaten nur in entschlüsselter Form auf dem oder jedem anderen Gerät in Verbindung mit dem Schlüssel oder einem anderen mit dem Schlüssel assoziierten Schlüssel wiedergegeben werden können.

26. System zum Verteilen von Daten, das Folgendes umfasst: ein mobiles Telekommunikationsnetz (3); mehrere in einer Domäne (24) assoziierte Geräte (1, 11, 25, 27), von denen wenigstens eines bei dem mobilen Telekommunikationsnetz (3) registriert ist; einen Inhaltsanbieter (21) zum Verteilen von verschlüsselten Inhaltsdaten; einen Rechteausgeber (23) zum Verteilen von Entschlüsselungsdaten, um die Entschlüsselung von verschlüsselten Inhaltsdaten zuzulassen; wobei der Inhaltsanbieter (21) die Aufgabe hat, dem ersten der genannten Geräte (1) verschlüsselte Inhaltsdaten bereitzustellen, wobei der Rechteausgeber (23) die Aufgabe hat, Entschlüsselungsdaten zum ersten der Geräte zu übertragen, um die Entschlüsselung der verschlüsselten Inhaltsdaten zuzulassen, wobei das erste der Geräte (1) die Aufgabe hat, eine Anwendung mit Daten aus den Inhaltsdaten und Daten aus den Entschlüsselungsdaten zu kompilieren und die Anwendung zu einem oder mehreren anderen Geräten (27) in der Domäne (24) zu übertragen, so dass das oder jedes andere Gerät (27) die Anwendung zum Wiedergeben der Inhaltsdaten in entschlüsselter Form benutzen kann.

27. Datenverarbeitungsgerät (1) zum Empfangen von verschlüsselten Inhaltsdaten und von Entschlüsselungsdaten zum Zulassen des Entschlüsselns der verschlüsselten Inhaltsdaten, das Mittel zum Kompilieren einer Anwendung mit Daten aus den genannten Inhaltsdaten und Daten aus den genannten Entschlüsselungsdaten und zum Übertragen der Anwendung zu einem oder mehreren anderen Geräten (1, 11, 25, 27) umfasst, so dass das oder jedes andere Gerät die Anwendung zum Wiedergeben des Inhalts in entschlüsselter Form benutzen kann.

28. Gerät nach Anspruch 27, wobei das Gerät (1) und das oder jedes andere Gerät (1, 11, 25, 27) in einer Domäne (24) assoziiert sind.

29. Gerät nach Anspruch 27 oder 28, das ein mobiles Telekommunikationsgerät umfasst.

30. Gerät nach Anspruch 29, wobei das mobile Telekommunikationsgerät die Aufgabe hat, drahtlos mit einem mobilen Telekommunikationsnetz (3) zu kommunizieren.

31. Gerät oder System nach einem der Ansprüche 26 bis 30, wobei die an dem Gerät (1) empfangenen verschlüsselten Inhaltsdaten von einem Inhaltsanbieter (21) fern von dem Gerät (1) empfangen werden.

32. Gerät oder System nach einem der Ansprüche 26 bis 31, wobei die an dem Gerät (1) empfangenen Entschlüsselungsdaten von einem Rechteausgeber (23) fern von dem Gerät (1) empfangen werden.

33. Gerät oder System nach einem der Ansprüche 31 bis 32, wobei die an dem Gerät (1) empfangenen verschlüsselten Inhaltsdaten über das mobile Telekommunikationsnetz (3) übertragen werden.

34. Gerät oder System nach einem der Ansprüche 31 bis 33, wobei die an dem Gerät (1) empfangenen Entschlüsselungsdaten über das mobile Telekommunikationsnetz (3) übertragen werden.

35. Gerät oder System nach einem der Ansprüche 26 bis 34, wobei das mobile Telekommunikationsnetz (3) ein mobiles GSM-Telekommunikationsnetz umfasst.

36. Gerät oder System nach einem der Ansprüche 26 bis 35, wobei das mobile Telekommunikationsnetz (3) ein mobiles UMTS-(3G)-Telekommunikationsnetz umfasst.

37. Gerät oder System nach einem der Ansprüche 26 bis 36, wobei alle Geräte (1, 11, 25, 27) in der Domäne (24) einen Domänen-Schlüssel gemeinsam nutzen.

38. Gerät oder System nach einem der Ansprüche 26 bis 37, wobei die Domäne eine Domäne gemäß Definition in der Open Mobile Alliance DRM Specification Version 2.0 oder einer beliebigen Folgeversion davon umfasst.

39. Gerät oder System nach einem der Ansprüche 26 bis 38 mit lokalen Kommunikationsmitteln zum Übertragen der Anwendung zu einem oder mehreren der anderen Geräte (27) in der Domäne (24).

40. Gerät oder System nach Anspruch 39, wobei die lokale Kommunikation eine Drahtlosverbindung wie WLAN, Bluetooth oder Infrarot umfasst.

41. Gerät oder System nach Anspruch 39, wobei die lokale Kommunikation über ein Kabel oder eine andere feste Verbindung erfolgt.

42. Gerät oder System nach einem der Ansprüche 26 bis 41 mit Mitteln zum Verschleiern des die Anwendung bildenden Codes vor dem Übertragen der Anwendung zu einem oder mehreren der anderen Geräte in der Domäne.

43. Gerät oder System nach einem der Ansprüche 26 bis 42, wobei die Anwendung Daten zum Erleichtern des Darstellens der Inhaltsdaten auf dem oder jedem anderen Gerät beinhaltet.

44. Gerät oder System nach Anspruch 43, wobei das Darstellen beinhaltet, dass das oder jedes andere Gerät veranlasst wird, einen für den Benutzer dieses Gerätes nützlichen Audio- und/oder Videoausgang zu erzeugen.

45. Gerät oder System nach einem der Ansprüche 26 bis 44, wobei die Entschlüsselungsdaten zum Steuern oder Beschränken der Benutzung der Inhaltsdaten benutzt werden können.

46. Gerät oder System nach Anspruch 45 mit Mitteln zum Führen eines Satzes von empfangenen Entschlüsselungsdaten und eines Satzes von Daten von den genannten Entschlüsselungsdaten auf dem Gerät, die als Teil der Anwendung zu einem oder mehreren anderen Geräten übertragen werden, so dass die Benutzung des Inhalts in der Domäne gemäß den Entschlüsselungsdaten erfolgt.

47. Gerät oder System nach einem der Ansprüche 45 bis 46, wobei die Entschlüsselungsdaten angeben, wie oft die Inhaltsdaten benutzt werden können.

48. Gerät oder System nach einem der Ansprüche 45 bis 47, wobei die Entschlüsselungsdaten die Zeitperiode vorgeben, während der die Inhaltsdaten benutzt werden können.

49. Gerät oder System nach einem der Ansprüche 26 bis 48, wobei das oder jedes mobile Telekommunikationsgerät mit einem mobilen Telekommunikationsnetz (3) authentifiziert wird.

50. Gerät oder System nach einem der Ansprüche 26 bis 49 mit Mitteln zum Einbetten der Daten aus den genannten Entschlüsselungsdaten in der Anwendung, um zu verhindern, dass eine Fremdpartei diese Daten unrechtmäßig identifizieren kann.

51. Gerät oder System nach einem der Ansprüche 26 bis 50 mit Mitteln zum Kompilieren der Anwendung mit einem Schlüssel, der mit dem oder jedem anderen Gerät assoziiert ist, so dass die Inhaltsdaten nur in entschlüsselter Form auf dem oder jedem anderen Gerät in Verbindung mit dem Schlüssel oder einem anderen mit dem Schlüssel assoziierten Schlüssel wiedergegeben werden können.

## Revendications

1. Procédé de distribution de données entre une pluralité de dispositifs (1, 11, 25, 27) associés dans un domaine (24), le procédé comprenant la réception de données de contenu cryptées au niveau d'un premier desdits dispositifs (1) ; la réception de données de décryptage au niveau du premier desdits dispositifs (1) pour permettre le décryptage des données de contenu cryptées ; et l'exploitation du premier dispositif (1) pour compiler une application comportant des données issues desdites données de contenu et des données issues desdites données de décryptage et la transmission de l'application à un ou plusieurs autres dispositifs (27) présents dans le domaine (24) de sorte que ledit dispositif ou chaque autre dispositif (27) puisse utiliser l'application afin de reproduire les données de contenu sous forme décryptée.

2. Procédé selon la revendication 1, les données de contenu cryptées reçues au niveau du premier dispositif (1) étant reçues d'un fournisseur de contenu (21) qui est distant du premier dispositif (1).

3. Procédé selon la revendication 1 ou 2, les données décryptées reçues au niveau du premier dispositif (1) étant reçues d'un émetteur de droits (23) qui est distant du premier dispositif (1).

4. Procédé selon la revendication 1, 2 ou 3, le premier desdits dispositifs (1) comprenant un dispositif de télécommunications mobiles.

5. Procédé selon la revendication 1, 2, 3 ou 4, ledit dispositif ou l'un au moins des autres dispositifs (27) comprenant un dispositif de télécommunications mobiles.

6. Procédé selon la revendication 4 ou 5, ledit ou chaque dispositif de télécommunications mobiles communiquant sans fil avec un réseau de télécommunications mobiles (3).

7. Procédé selon la revendication 6, les données de contenu cryptées reçues au niveau du premier dispositif (1) étant transmises par l'intermédiaire du réseau de télécommunications mobiles (3).

8. Procédé selon la revendication 6 ou 7, les données de décryptage reçues au niveau du premier dispositif (1) étant transmises par l'intermédiaire du réseau de télécommunications mobiles (3).

9. Procédé selon la revendication 6, 7 ou 8, le réseau de télécommunications mobiles (3) comprenant un réseau de télécommunications mobiles GSM.

10. Procédé selon la revendication 6, 7, 8 ou 9, le réseau de télécommunications mobiles (3) comprenant un réseau de télécommunications mobiles UMTS (3G).

11. Procédé selon l'une quelconque des revendications 1 à 10, chacun des dispositifs (1, 11, 25, 27) présents dans le domaine (24) partageant une clé de domaine.

12. Procédé selon l'une quelconque des revendications 1 à 11, le domaine (24) comprenant un domaine tel que défini dans la Spécification DRM Open Mobile Alliance, version 2.0 ou toute version ultérieure de celle-ci.

13. Procédé selon l'une quelconque des revendications 1 à 12, l'étape de transmission de l'application vers un ou plusieurs des autres dispositifs (27) présents dans le domaine (24) étant effectuée par une communication locale.

14. Procédé selon la revendication 13, la communication locale comprenant une liaison sans fil, par exemple WLAN, Bluetooth ou infrarouge.

15. Procédé selon la revendication 13, la communication locale étant réalisée au moyen d'un câble ou d'une autre liaison fixe.

16. Procédé selon l'une quelconque des revendications 1 à 15, comprenant l'occultation du code qui forme l'application avant de transmettre l'application à un ou plusieurs des autres dispositifs (27) présents dans le domaine (24).

17. Procédé selon l'une quelconque des revendications 1 à 16, l'application comportant des données destinées à faciliter le rendu des données de contenu sur ledit dispositif ou chaque autre dispositif (27).

18. Procédé selon la revendication 17, le rendu comprenant l'opération consistant à obliger ledit dispositif ou chaque autre dispositif (27) à générer une sortie audio et/ou visuelle qui est utile à l'utilisateur de ce dispositif.

19. Procédé selon l'une quelconque des revendications 1 à 18, les données de décryptage contrôlant ou limitant l'utilisation des données de contenu.

20. Procédé selon la revendication 19, comprenant la conservation dans le premier dispositif (1) d'un enregistrement des données de décryptage reçues et d'un enregistrement des données issues desdites données de décryptage transmises comme partie intégrante de l'application vers un ou plusieurs des autres dispositifs (27), de sorte que l'utilisation du contenu au sein du domaine soit faite en conformité avec les données de décryptage.

21. Procédé selon la revendication 19 ou 20, les données de décryptage spécifiant le nombre de fois que les données de contenu peuvent être utilisées.

22. Procédé selon la revendication 19, 20 ou 21, les données de décryptage spécifiant l'intervalle de temps pendant lequel les données de contenu peuvent être utilisées.

23. Procédé selon l'une quelconque des revendications 6 à 10, ledit ou chaque dispositif de télécommunications mobiles étant authentifié auprès d'un réseau de télécommunications mobiles.

24. Procédé selon l'une quelconque des revendications 1 à 23, les données issues desdites données de décryptage étant intégrées à l'application afin de neutraliser l'aptitude d'une tierce partie à identifier illicitement ces données.

25. Procédé selon l'une quelconque des revendications 1 à 24, l'application étant compilée grâce à l'utilisation d'une clé associée audit dispositif ou chaque autre dispositif, de sorte que les données de contenu puissent uniquement être reproduites sous forme décryptée sur ledit dispositif ou chaque autre dispositif en conjonction avec la clé ou une autre clé associée à la clé.

26. Système destiné à distribuer des données, comprenant un réseau de télécommunications mobiles (3) ; une pluralité de dispositifs (1, 11, 25, 27) associés dans un domaine (24), dont l'un au moins est enregistré auprès du réseau de télécommunications mobiles (3) ; un fournisseur de contenu (21) pour distribuer les données de contenu cryptées ; un émetteur de droits (23) pour distribuer des données de décryptage afin de permettre le décryptage des données de contenu cryptées ; cas dans lequel le fournisseur de contenu (21) est utilisable pour fournir des données de contenu cryptées au premier desdits dispositifs (1), l'émetteur de droits (23) est utilisable pour transmettre les données de décryptage au premier des dispositifs afin de permettre le décryptage des données de contenu cryptées, cas dans lequel le premier des dispositifs (1) est utilisable pour compiler une application comprenant des données issues des données de contenu et des données issues des données de décryptage et pour transmettre l'application vers un ou plusieurs autres dispositifs (27) présents dans le domaine (24) de sorte que ledit dispositif ou chaque autre dispositif (27) puisse utiliser l'application afin de reproduire les données de contenu sous forme décryptée.

27. Dispositif de traitement de données (1) pour recevoir des données de contenu cryptées et des données de décryptage afin de permettre le décryptage des données de contenu cryptées, englobant des moyens pour compiler une application qui renferme des données issues desdites données de contenu et des données issues desdites données de décryptage et transmettre l'application vers un ou plusieurs autres dispositifs (1, 11, 25, 27) de sorte que ledit dispositif ou chaque autre dispositif puisse utiliser l'application afin de reproduire le contenu sous forme décryptée.

28. Dispositif selon la revendication 27, le dispositif (1) et ledit dispositif ou chaque autre dispositif (1, 11, 25, 27) étant associés dans un domaine (24).

29. Dispositif selon la revendication 27 ou 28, comprenant un dispositif de télécommunications mobiles.

30. Dispositif selon la revendication 29, le dispositif de télécommunications mobiles étant utilisable pour communiquer sans fil avec un réseau de télécommunications mobiles (3).

31. Dispositif ou système selon l'une quelconque des revendications 26 à 30, les données de contenu cryptées reçues au niveau du dispositif (1) étant reçues d'un fournisseur de contenu (21) qui est distant du dispositif (1).

32. Dispositif ou système selon l'une quelconque des revendications 26 à 31, les données de décryptage reçues au niveau du dispositif (1) étant reçues d'un émetteur de droits (23) qui est distant du dispositif (1).

33. Dispositif ou système selon l'une quelconque des revendications 31 à 32, les données de contenu cryptées reçues au niveau du dispositif (1) étant transmises par l'intermédiaire du réseau de télécommunications mobiles (3).

34. Dispositif ou système selon l'une quelconque des revendications 31 à 33, les données de décryptage reçues au niveau du dispositif (1) étant transmises par l'intermédiaire du réseau de télécommunications mobiles (3).

35. Dispositif ou système selon l'une quelconque des revendications 26 à 34, le réseau de télécommunications mobiles (3) comprenant un réseau de télécommunications mobiles GSM.

36. Dispositif ou système selon l'une quelconque des revendications 26 à 35, le réseau de télécommunications mobiles (3) comprenant un réseau de télécommunications mobiles UMTS (3G).

37. Dispositif ou système selon l'une quelconque des revendications 26 à 36, chacun des dispositifs (1, 11, 25, 27) présents dans le domaine (24) partageant une clé de domaine.

38. Dispositif ou système selon l'une quelconque des revendications 26 à 37, le domaine comprenant un domaine tel que défini dans la Spécification DRM Open Mobile Alliance, version 2.0 ou toute version ultérieure de celle-ci.

39. Dispositif ou système selon l'une quelconque des revendications 26 à 38, englobant des moyens de communication locale pour transmettre l'application vers un ou plusieurs des autres dispositifs (27) présents dans le domaine (24).

40. Dispositif ou système selon la revendication 39, la communication locale englobant une liaison sans fil, par exemple WLAN, Bluetooth or infrarouge.

41. Dispositif ou système selon la revendication 39, la communication locale étant réalisée au moyen d'un câble ou d'une autre liaison fixe.

42. Dispositif ou système selon l'une quelconque des revendications 26 à 41, comprenant des moyens pour occulter le code qui forme l'application avant de transmettre l'application vers un ou plusieurs des autres dispositifs présents dans le domaine.

43. Dispositif ou système selon l'une quelconque des revendications 26 à 42, l'application comportant des données destinées à faciliter le rendu des données de contenu sur ledit dispositif ou chaque autre dispositif.

44. Dispositif ou système selon la revendication 43, le rendu comprenant l'opération consistant à obliger ledit dispositif ou chaque autre dispositif à générer une sortie audio et/ou visuelle qui est utile à l'utilisateur de ce dispositif.

45. Dispositif ou système selon l'une quelconque des revendications 26 à 44, les données de décryptage pouvant être utilisées pour contrôler ou limiter l'utilisation des données de contenu.

46. Dispositif ou système selon la revendication 45, comprenant des moyens pour conserver dans le dispositif un enregistrement des données de décryptage reçues et un enregistrement des données issues desdites données de décryptage transmises comme partie intégrante de l'application vers un ou plusieurs autres dispositifs, de sorte que l'utilisation du contenu au sein du domaine soit faite en conformité avec les données de décryptage.

47. Dispositif ou système selon l'une quelconque des revendications 45 à 46, les données de décryptage spécifiant le nombre de fois que les données de contenu peuvent être utilisées.

48. Dispositif ou système selon l'une quelconque des revendications 45 à 47, les données de décryptage spécifiant l'intervalle de temps pendant lequel les données de contenu peuvent être utilisées.

49. Dispositif ou système selon l'une quelconque des revendications 26 à 48, ledit ou chaque dispositif de télécommunications mobiles étant authentifié auprès d'un réseau de télécommunications mobiles (3).

50. Dispositif ou système selon l'une quelconque des revendications 26 à 49, comprenant des moyens pour intégrer les données issues desdites données de décryptage au sein de l'application afin de neutraliser l'aptitude d'une tierce partie à identifier illicitement ces données.

51. Dispositif ou système selon l'une quelconque des revendications 26 à 50, comprenant des moyens pour compiler l'application grâce à l'utilisation d'une clé associée audit dispositif ou chaque autre dispositif, de sorte que les données de contenu puissent uniquement être reproduites sous forme décryptée sur ledit dispositif ou chaque autre dispositif en conjonction avec la clé ou une autre clé associée à la clé.
